# EUROPEAN PATENT SPECIFICATION

(11) **EP 3 050 436 B1**
(45) Date of publication and mention of the grant of the patent: **30.08.2017**
(21) Application number: 16161447.4
(22) Date of filing: 24.12.2012
(51) Int. Cl.: A23J 1/02, C11B 13/00

(54) **PROCESS FOR ISOLATING A PROTEIN COMPOSITION AND A FAT COMPOSITION FROM MECHANICALLY DEBONED POULTRY**
VERFAHREN ZUR ISOLIERUNG EINER PROTEINZUSAMMENSETZUNG UND EINER FETTZUSAMMENSETZUNG AUS MECHANISCH ENTBEINTEM GEFLÜGEL
PROCÉDÉ POUR ISOLER UNE COMPOSITION DE PROTÉINE ET UNE COMPOSITION DE GRAISSE À PARTIR DE VOLAILLE DÉSOSSÉE MÉCANIQUEMENT

(30) Priority: 28.12.2011 US 201113374398
(43) Date of publication of application: 03.08.2016
(62) Divisional of application: 12813236.2
(73) Proprietor: Proteus Industries, Inc., Gloucester, MA 01930 (US)
(72) Inventor: Kelleher, Stephen D., Ipswich, MA 01938 (US); Saunders, Wayne S., Gloucester, MA 01930 (US); Fielding, William R., Hilton Head, SC 29926 (US)
(74) Representative: Trillat, Anne-Cecile

(56) References cited:
- WO-A1-02/065848
- US-A1- 2009 269 440
- US-A1- 2011 244 093

## Description

### Technical

This invention relates to a process for isolating a protein composition and a stable fat composition from a fatty composition comprising mechanically deboned poultry containing animal muscle tissue. More particularly, this invention relates to such a process wherein the animal muscle tissue is solubilized in an acid and the liquid acidic protein composition so obtained is separated from solid animal fat and impurities under conditions (a) to reduce calcium content (b) to reduce sodium concentrations, and (c) to reduce oxidation.

### Background Art

At the present time, protein recovered from animal muscle tissue is obtained by solubilizing the animal muscle tissue in an edible acidic composition such as citric acid, hydrochloric acid or mixtures thereof. Such processes are disclosed in U.S. Patents 6,005,073; 6,288,216; 6,451,975 and 7,473,364. While these processes are well adapted for recovering protein from animal muscle tissue, they may have shortcomings when protein is extracted from starting material high in bone concentration. Chief among these are the potentially high amounts of calcium, originally found in the intrinsic bone material, that ends up in the final meat product. The final meat product contains bone and may or may not be mechanically deboned to separate the majority of the bone from the meat. These bone containing meats contain a high concentration of animal muscle tissue, typically between 65-85% by weight with the remaining composition comprising primarily fat and bone. Mechanically deboned poultry may also contain high amounts of blood, a component that contributes hemoglobin and its constituent iron/heme molecules to the mix. Richards et al (1998) found that microgram levels of heme pigment were found to be a controlling factor in the oxidation of fish muscle. Thus, it is desirable to recover the protein from the animal muscle tissue for use as a food additive rather than discarding it. It is also desirable to recover purified and stabilized fat from poultry containing bone such as mechanically deboned poultry which has economic value such as for a food additive.

It is also desirable to process mechanically separated poultry derived muscle tissue in a manner which retains functionality of the recovered protein product. Protein functionalities of most concern to food scientists are solubility, water holding capacity, gelation, foam stability and emulsification properties.

It is also desirable to process the animal tissue in a manner which results in a final product that has large fibers, which better produces better yield and has better final product texture.

It is also desirable to provide a process for producing a fat fraction having a relatively low concentration of water and which is stable against oxidation. Such a form of fat permits its addition to a variety of food products.

The U.S. government provides that a certain quality of meat product obtained from animal trimmings can be used undeclared in meat products of the same species. For example, "finely textured beef and "lean finely textured beef can be used in ground beef without being declared on the label. "Finely textured meat" is required to have a fat content of less than 30%; a protein content of 14% or greater, by weight; a protein efficiency ratio (PER) of 2.5 or higher, or an essential amino acids (EAA) content of 33% of the total amino acids or higher; must be prepared in a federally inspected plant; must not have a product temperature during processing exceeding 110°F.; must be frozen in less than 30 minutes after processing; must not allow a significant increase in bacterial numbers; and must not be treated with chemicals or additives that remain in the meat. "Lean finely textured meat" (LFTM) is required to have a fat content of less than 10%,by weight, and complies with the other requirements of "finely textured meat".

Accordingly, it would be desirable to provide a process for isolating animal muscle protein from fatty animal tissue containing animal muscle tissue such as from poultry containing bone including mechanically deboned poultry which provides high yields of functional animal muscle protein while significantly destroying microorganisms. Furthermore, it would be desirable to provide a fat product from poultry meat containing bone such as mechanically deboned poultry which is stable against oxidation and which has a relatively low concentration of water. Also, it would be desirable to provide an animal muscle protein product that has similar or reduced sodium content as compared to the original meat. In addition, it would be desirable to provide such a process which eliminates undesirable smell characteristics such as the smell of ammonia. Furthermore it would desirable to produce a final meat product that has large fibers which results in a more desirable ground meat-like texture and mouth feel. Such a process would provide high recovery rates of fat stable against oxidation and of animal muscle protein in a low microorganism environment while avoiding the addition and retention of ingredients which adversely affect edibility of the protein product. US 2011/0244093 A1 discloses that an animal muscle protein composition comprising sarcoplasmic proteins and myofibrillar proteins derived from animal muscle tissue provides improved moisture retention in food being thawed or cooked.

### Disclosure of Invention

In accordance with this invention, a process is provided for isolating both animal muscle protein having a satisfactory color and fat stabilized against oxidation from poultry containing bone such as mechanically deboned poultry comprising animal muscle tissue and fat. The process provides high yields of functional animal muscle protein having satisfactory color while avoiding problems due to the presence of microorganisms and avoiding problems which render the recovered proteins inedible. The process of this invention also provides a fat product which is stable against oxidation and which contains a relatively low water concentration. The process of this invention is capable of meeting the definition of "finely textured meat" or "lean finely textured meat" as defined by the U.S. government for beef and hopefully extended to poultry.

The process of this invention includes the process steps of comminuting fresh or frozen poultry containing bone such as mechanically deboned poultry, adding cold potable water to the comminuted poultry; optionally adding a food grade acid; homogenizing the comminuted poultry-water mixture; adding a food grade acid to the homogenized mixture to lower the pH of the resultant mixture to between 3.6 to 4.4, preferably between 3.6 and 3.8 to selectively dissolve the animal muscle tissue; separating the solid fat from the acidic solution of animal muscle protein; recovering the solid fat; optionally evaporating water from the acidic solution of animal muscle protein to form a concentrated protein solution; recovering the acidic solution of animal muscle protein or adding a food grade alkaline composition to the acidic animal muscle protein solution to increase the pH to between about 4.9 and about 6.4, preferably between about 5.2 and about 5.8 to forma salt from the reaction of the acid with the alkaline composition and to precipitate the protein, separating the solid protein from the remaining liquid such as by centrifugation and/or screen filtration and optionally freezing the resultant essentially neutral animal muscle protein composition.

It has been found that when reducing the pH of animal muscle tissue from 3.6 to 4.4 in accordance with this invention, the animal muscle tissue is solubilized while retaining essentially its original color and that satisfactory yields of muscle tissue (protein) are obtained. It has also been found that solubilization of the animal muscle tissue in acid results in a significant reduction of viable microorganisms, particularly when utilizing food grade hydrochloric acid as the acid. One particular food grade acid and base combination of interest in this present invention is citric acid to lower the pH and sodium bicarbonate to raise the pH. It has also been found that mixing the fat with food grade acid in accordance with this invention, stabilizes the fat against oxidation. In addition, it has been found that when mixing the fat containing acid with a food grade base to a pH between about 4.9 and about 5.8 effects separation of water from the fat from about 70 to about 50 weight% down to a water content between about 30 and about 20 weight percent. This result simplifies subsequent water removal from the fat if such additional water removal is desired. Lastly, in the process of this invention, the presence of undesirable acidic or alkaline additives in the final protein product is eliminated due to the neutralization of the acid with the alkaline.

### Brief Description of the Drawing

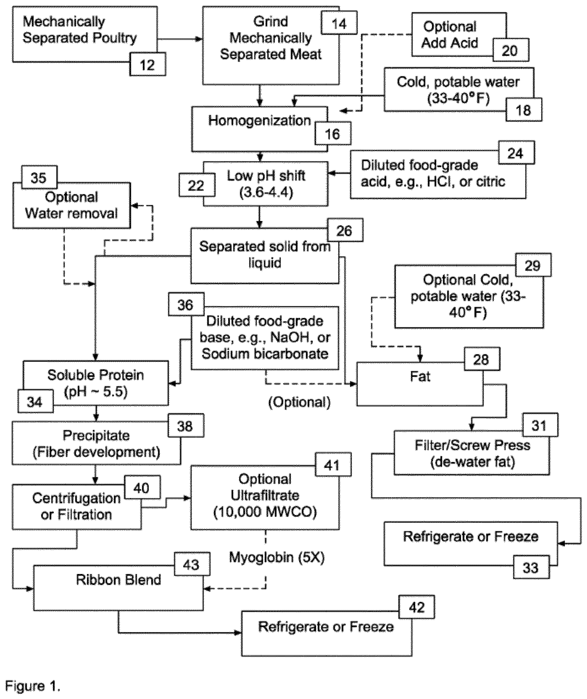

Figure 1 is a process flow diagram of the process of this invention.

### Description of Embodiments

The present invention relates to a method for processing animal trimmings to recover meat products low in fat content and high in protein and essential amino acid content as well as a stabilized fat product. "Meat product" describes a protein-containing product which is suitable for human consumption as meat because it contains a certain amount of protein. Generally, "mechanically deboned poultry" refers to the tissue separated from poultry containing fat and bone during butchering operations. The conventional poultry cuts or parts are generally sold directly to consumers or further processed such as grinding into ground poultry. The tissue remaining after the conventional cuts are removed, generally has a fat content which is too high for human consumption as meat, but contains proteins which can be recovered.

According to the present invention, once the poultry pieces containing bone such as mechanically deboned poultry are removed from the carcasses, they are preferably forwarded directly to the process of the present invention. Alternatively, the recovered poultry can be frozen or cooled and stored prior to processing. The temperature of the recovered poultry upon removal from the carcasses is usually about 33 - 40°F which corresponds to the temperature at which the carcasses are stored prior to butchering. Warmer or cooler trimmings can be used in the process of the present invention.

The poultry containing bone processed by the present invention can include all the parts normally found in an animal, including adipose tissue, fat, lean ligaments, tendons, bone parts, and the like. It is generally desirable that if components other than fat, lean, and moisture are present, they are present in small quantities and/or can be removed in the desinewing step or by hand, if desired, or can be left therein if their presence does not adversely affect the properties of the poultry meat product. If large amounts of certain components are present, it may be desirable to have them removed by conventional separation techniques prior to processing according to the present invention. For example, it is generally desirable not to have large amounts of bone present or large amounts of low quality ligaments.

"Meat producing animals" includes animals which are known to provide meat. Such animals include poultry such as chicken or turkey, e.g. mechanically deboned chicken, and the like. The lean material can be referred to as protein-containing material, and can be in the form of water soluble protein which include muscle fiber, and non- water soluble protein which are generally the myofibrillar or locomotion proteins or the connective tissue which surrounds muscle fiber and which attach the muscle fibers to ligaments. Of particular interest for purposes of the present invention is the presence of the water soluble protein and the acid soluble protein from the animal muscle tissue in the fatty tissue within the fat trimmings. By separating this protein material from the animal trimmings, a high quality meat product can be provided. This product can be utilized as an additive to conventional meat products such as to hamburg.

Poultry containing meat, fat and bone, which can be used in the present invention preferably, have an average fat content of between about 5 and 50% by weight, preferably between about 10 and 30% by weight. The lean content of the poultry containing bone is preferably between about 65% and 85% by weight, and more preferably between about 75 and 85% by weight. The lean content includes protein and moisture. In order to ensure reliable and consistent results, it is preferable that the lean content of the animal trimmings is at least about 30% by weight and preferable at least about 39% by weight.

Referring to Figure 1 which illustrates a preferred embodiment of this invention, a feed 12 such as mechanically deboned or separated poultry containing about 50% by weight muscle tissue and about 50% by weight fat, mechanically separated chicken or the like are directed to a comminution step 14 which increases the surface area of the poultry rendering it more suitable for further processing. Suitable comminution apparatus include meat grinder available from Weiler and Company Corporation located in Whitewater, Wl or Carnitec USA, Inc, located in Seattle, WA. The starting poultry is first ground to a size that enables it to be put through a micro-cutter. It is preferable to coarse cut 3/4 inch, followed by a 1/8inch grind. Some mechanically deboned meat may not need to be pre- ground because it is already at the appropriate particle size. Once ground, the material is mixed with water (33-40°F) at a ratio of one part ground meat to approximately 5-6 parts water. This amount of water can vary and can go as high as approximately 1 part ground meat to 10 parts cold water. The addition of water lowers the ionic strength of the homogenate which is required for complete solubilization of the proteins. Optionally, acid can be added to the poultry in step 20 to improve protein solubilization. The comminuted poultry is directed to homogenization step 16 where it is mixed with potable water 18 at a water temperature typically between about 33°F and about 40°F and homogenized, typically to an average particle size of about 0.5 to about 4 millimeters preferably between about 1 to about 2 millimeters. A preference has been shown for a micro-cut with a 0.035 mm cutting head size. Representative suitable homogenizers for this purpose include emulsifiers or micro-cutters, available from Stephan Machinery Corporation, located in Columbus, OH or high-shear mixers available from Silverson, located in East Longmeadow, MA or the like.

In a step to control microorganisms, the temperature of the homogenate is kept cold throughout the process (33-40°F). The cold temperature is most effective for separating the fat from the protein. This unit operation is accomplished while the pH is still near the pH of the initial muscle. An alternative is to add enough food-grade acid to bring the composite pH to the isoelectric point. Typically, the isoelectric point is about pH 5.5, but it can vary from species to species. At the isoelectric point, proteins are least able to form emulsions with lipid molecules, and, therefore, more lipid renders away from the proteins during the extraction process. Once the tissue is homogenized, it is ready to be adjusted to a low pH.

The resultant homogenate is directed to step 22 wherein it is mixed with a food grade acid 24 such as dilute hydrochloric acid, dilute phosphoric acid, dilute citric acid, ascorbic acid, tartaric acid or mixtures thereof or the like in order to reduce the pH of the homogenate to between pH 3.6 and pH 4.4, preferably between pH 3.6 and pH 3.8 to dissolve animal muscle tissue thereby to obtain a satisfactory yield of protein such as 80% yield or higher in an acidic protein solution thereof while retaining the fat portion in solid form. It is preferred to utilize hydrochloric acid since its use results in more significant reduction of viable microorganisms in the acidic protein solution.

Acidification of the proteins under low salt conditions has been shown to unfold the proteins, which is believed to create more surface area along the proteins and hence more potential water binding sites. Once the proteins are soluble, the fat renders away from the proteins and floats to the surface of an aqueous acidic solution. Other potential impurities, including any residual bone, skin or sinew, stay insoluble as well. The pH is adjusted to 3.6 to 4.4. As an example, the approximate amount of acid needed to effect solubilization of the muscle proteins is approximately 0.15 to 0.80 weight %, e.g..0.198 weight% based on the weight of HCl to total weight (pH 3.74). This amount is dependent on the desired low pH (pH 3.6 or 4.4) and also on the pH of the starting material. Suitable mixers to effect this step include Lightnin Mixers available from SPX Corporation, located in Charlotte, NC or the like.

The resultant mixture of acidic solution of animal muscle protein and solid fat then is directed to separation step 26 such as a decanter centrifuge and/or screen filter 26 to separate the acidic protein solution from the solid fat.

Subsequent to the solubilization of the proteins and removal of impurities and fat, the proteins are subjected to an increase in pH such as by the addition of diluted, food- grade base such as sodium hydroxide (NaOH) or sodium bicarbonate (NaHC03). The base is added until the isoelectric point is obtained and the proteins refold and rejoin with each other to form large, fiberized molecules. Upon reaching the isoelectric point pH, the proteins easily release their closely aligned water molecules, and the moisture content can be returned to the moisture content found in meat or consistent with LFTM. The solid fat in step 28 is optionally mixed with a food grade alkali to separate water from fat and to neutralize the fat. Optionally, cold potable water from step 29 can be added to the fat in step 28. The alkali promotes separation of fat from water. The fat then is filtered in step 31 to remove water from fat and reduce the water content from about 70 to 50 weight percent to about 30 to 20 weight percent. Optionally, the fat can be refrigerated or frozen in step 33. Suitable filtration apparatus include vibrating screen available from Sweco Corporation, located in Florence, KY or the like. The screens have a size between about 4000 micron and about 2000 microns, preferably between about 3500 microns and about 2500 microns. Additional base can be added in step 34 to bring the pH of the precipitated proteins back to the original pH of the tissue. This assures that the base (NaOH or NaHC03) has fully reacted with and consumed all of the previously added acid such as HCL or citric. An optional step is to direct the protein product to a unit operation 35 which removes water to concentrate the liquid for the purpose of creating larger fibers upon raising the pH. The unit operation could consist of any device found to remove water in a continuous or batch manner, such as an evaporator or more desirable an ultrafiltration unit. The amount of water removed can vary, however, greater amounts of water removed results in larger and more robust and sturdy fibers and increased protein recovery. The resultant protein product is a viscous sediment containing protein at a concentration of about 4-14 percent by weight or higher to produce a protein containing solution which is directed to mixing step 34 wherein it is mixed with food grade alkaline 36 such as sodium hydroxide, potassium hydroxide, sodium bicarbonate, or the like. The protein product is precipitated in step 3 8 and is recovered such as by centrifugation and filtration in step 40. Optionally, an ultrafiltrate retentate having a >5000-10000 molecular weigh cut off (MWCO) is recovered in step 41. This ultrafiltrate can be blended as desired with the precipitated protein in step 43. This results in a protein product having a reduced sodium content. The sodium is concentrated in the lower molecular weight fraction that is discarded. The resultant product has desired reduced sodium and is obtained by a process (pH 3.6-4.4) that provides high yield of protein from the starting poultry feed of about 80% or greater. Thus, the process of this invention, provides a greatly improved protein product over the available prior art.

The protein product from step 40 contains 14 percent or greater by weight protein, contains less than 10 percent by weight fat, is produced at a temperature less than 110°F, can be frozen within 30 minutes in step 42 from process completion, does not allow a significant increase in bacteria and, in the embodiment wherein the protein precipitated with alkali does not retain chemicals or additives other than a low concentration of salt such as sodium chloride or the like.

The meat protein products of this invention are not significantly altered by the processing method of this invention. An examination of the proteins associated with the starting meat source and the lean cold processed meats (precipitated refolded protein) shows that the extraction process is mild enough not to effect changes in the proteins throughout the entire process. It also shows that very little to no hydrolysis has occurred during the processing, partly due to the low temperature. Refolding of the protein also does not affect its profile.

In summary, the process of this invention produces protein in higher yields as compared to the prior art, contains fewer microorganisms as compared to the prior art and is in a form by which it can be more easily mixed with meat as compared to the products of the prior art. In addition, the fat product obtained is stabilized against oxidation.

The following examples illustrate this invention and are not intended to limit the same.

### Example I

Frozen mechanically separated chicken was obtained from a commercial production facility in Georgia. The product was fully thawed at refrigerated temperatures and the thawed meat was mixed with cold water at a 1:4 ratio (meat:water). The mixture was homogenized using a Kitchen Aid hand-held mixer for 2 min at high speed. The homogenate was adjusted to pH 2.8 or 3.6 using hydrochloric acid (2N), The acidified homogenate was filtered through a 1000 micron stainless steel screen. The filtrate was adjusted to pH 5.5 using sodium hydroxide (4N).and filtered through the same washed 1000 micron screen to dewater. Precipitated samples were frozen and sent to Silliker Labs, Chicago Heights, IL for analysis.

**Table 1. Metal and oxidation values of precipitated Lean Cold Processed Chicken made for pH 2.8 and pH 3.6**

| Analyte | Starting MDM | LCPC from pH 2.8 | LCPC from pH 3.6 | Procedure |
|---|---|---|---|---|
| Calcium (mg/100g, dry wgt basis) | 7.55 | 4.02 | 3.31 | AOAC 984.27 |
| Sodium (mg/100g, dry wgt basis) | 3.76 | 4.10 | 3.21 | AOAC 984.27 |
| PeroxySafe Peroxide value (meq/kg) (dry wgt basis) | 0.020 | 0.014 | 0.004 | AOAC R1 03050 |

Processing of mechanically separated poultry through the invention was shown to lower sodium and calcium and overall reduce the amount of oxidation that occurs in the final product compared to the starting material. Processing to pH 3.6 compared to pH 2.8 was shown to result in a great reduction in metals as well as further reduce the amount of oxidation that had occurred. It can be found in the literature that oxidation accelerates at low acidic pH values and therefore could explain in this experiment the oxidation increase as the meat is processed at the lower pH. It is probable that all of the increase in sodium in the lower pH sample (2.8) compared to the pH 3.6 sample is due to the fact that it required more sodium hydroxide to bring the lower pH sample to its iso-electric point.
Then the invention provides the process for recovering from poultry containing fat, bone and protein (a) a protein composition having a reduced calcium content, (b) a fat composition stabilized against oxidation and (c) a protein composition having a lower sodium content which comprises:
a) comminuting said poultry in water,
b) adding a food grade acid to said comminuted poultry to effect a pH of 3.6 to 4.4 thereby to solubilize said protein
c) separating solid fat from soluble protein and
d) adding a food grade alkali to said fat to neutralize acid in said fat and to said soluble protein to neutralize acid in said protein and to precipitate said protein.

Preferably, said pH in step b is from 3.6 to 3.8.

Preferably a food grade acid is added in step a.

Preferably a food grade acid is added in step a.

Preferably said food grade acid is hydrochloric acid and/or citric acid.

Preferably water is removed from said protein in step c. prior to adding said food-grade alkali.

Preferably in the process wherein water is removed, a food-grade acid is added in step a. Preferably, said food-grade acid is hydrochloric acid and/or citric acid.

## Claims

1. The process for recovering, from deboned poultry containing fat, bone and protein and initial levels of calcium and sodium, a protein composition with reduced levels of calcium and sodium as compared to the initial levels of calcium and sodium, wherein the deboned poultry has 65-85% by weight lean, the process comprising the steps of:
a) comminuting the poultry in water,
b) adding a food grade acid to the comminuted poultry to effect a pH of 3.6 to 4.4 thereby to solubilize the protein, wherein calcium remains insoluble,
c) after addition of the food grade acid in step b), separating solid fat from the solubilized protein, wherein calcium is separated together with the solid fat from the solubilized protein,
d) adding a food grade alkali to the fat to neutralize acid in the fat and to the solubilized protein to neutralize acid in the protein and to precipitate the protein, wherein sodium remains soluble, and
e) recovering from the precipitate the protein composition with reduced levels of calcium and sodium as compared to the initial levels of calcium and sodium, wherein the protein composition has 14% or greater by weight protein and less than 10% by weight fat, wherein the less than 10% by weight fat is stabilized against oxidation.

2. The process of Claim 1 wherein the protein composition with reduced levels of calcium and sodium has a color of 75 to 52 L*, 25 to 15 a*, and 23 to 16 b*.

3. The process of Claim 1 wherein said pH in step b is from 3.6 to 3.8.

4. The process of Claim 1 wherein a food grade acid is added in step a.

5. The process of Claim 3 wherein a food grade acid is added in step a.

6. The process of Claim 1 wherein said food grade acid is hydrochloric acid and/or citric acid.

7. The process of Claim 3 wherein said food grade acid is hydrochloric acid and/or citric acid.

8. The process of Claim 4 wherein said food grade acid is hydrochloric acid and/or citric acid.

9. The process of Claim 5 wherein said food grade acid is hydrochloric acid and/or citric acid.

10. The process of Claim 1 wherein water is removed from said protein in step c prior to adding said food-grade alkali.

11. The process of Claim 10 wherein a food-grade acid is added in step a.

12. The process of Claim 10 wherein said food-grade acid is hydrochloric acid.

13. The process of Claim 1 wherein said food grade alkali is sodium hydroxide or sodium bicarbonate.

14. The process of Claim 9 wherein said food grade alkali is sodium hydroxide or sodium bicarbonate.

15. The protein composition with reduced levels of calcium and sodium obtained by the process of Claim 1.

## Patentansprüche

1. Verfahren zum Gewinnen, aus entbeintem, fetthaltigem Geflügel, von Knochen und Protein und anfänglichen Niveaus von Calcium und Natrium, einer Proteinzusammensetzung mit reduzierten Niveaus von Calcium und Natrium im Vergleich mit den anfänglichen Niveaus von Calcium und Natrium, wobei das entbeinte Geflügel 65 - 85 Gew.-% mageres Fleisch aufweist, wobei das Verfahren die Schritte umfasst des:
a) Zerkleinerns des Geflügels in Wasser,
b) Zugebens von Säure von Nahrungsmittelqualität zu dem zerkleinerten Geflügel, um einen pH-Wert von 3,6 bis 4,4 zu bewirken, wodurch das Protein solubilisiert wird, wobei Calcium löslich bleibt,
c) auf die Zugabe der Säure von Nahrungsmittelqualität in Schritt b) hin, Abtrennens von festem Fett von dem solubilisierten Protein, wobei Calcium zusammen mit dem festen Fett aus dem solubilisierten Protein abgetrennt wird,
d) Zugebens eines Alkalis von Nahrungsmittelqualität zu dem Fett, um Säure in dem Fett zu neutralisieren, und zu dem solubilisierten Protein, um Säure in dem Protein zu neutralisieren und das Protein auszufällen, wobei Natrium löslich bleibt, und
e) Gewinnens, aus dem Präzipitat, der Proteinzusammensetzung mit reduzierten Niveaus von Calcium und Natrium im Vergleich mit den anfänglichen Niveaus von Calcium und Natrium, wobei die Proteinzusammensetzung 14 % oder mehr, auf das Gewicht bezogen, Protein und weniger als 10 Gew.-% Fett aufweist, wobei das weniger als 10 Gew.-% Fett gegen Oxidation stabilisiert wird.

2. Verfahren nach Anspruch 1, wobei die Proteinzusammensetzung mit reduzierten Niveaus von Calcium und Natrium eine Farbe von 75 bis 52 L*, 25 bis 15 a* und 23 bis 16 b* aufweist.

3. Verfahren nach Anspruch 1, wobei der pH-Wert in Schritt b 3,6 bis 3,8 beträgt.

4. Verfahren nach Anspruch 1, wobei eine Säure von Nahrungsmittelqualität in Schritt a zugegeben wird.

5. Verfahren nach Anspruch 3, wobei eine Säure von Nahrungsmittelqualität in Schritt a zugegeben wird.

6. Verfahren nach Anspruch 1, wobei die Säure von Nahrungsmittelqualität Salzsäure und/oder Zitronensäure ist.

7. Verfahren nach Anspruch 3, wobei die Säure von Nahrungsmittelqualität Salzsäure und/oder Zitronensäure ist.

8. Verfahren nach Anspruch 4, wobei die Säure von Nahrungsmittelqualität Salzsäure und/oder Zitronensäure ist.

9. Verfahren nach Anspruch 5, wobei die Säure von Nahrungsmittelqualität Salzsäure und/oder Zitronensäure ist.

10. Verfahren nach Anspruch 1, wobei Wasser aus dem Protein in Schritt c vor der Zugabe von Alkali von Nahrungsmittelqualität entfernt wird.

11. Verfahren nach Anspruch 10, wobei eine Säure von Nahrungsmittelqualität in Schritt a zugegeben wird.

12. Verfahren nach Anspruch 10, wobei die Säure von Nahrungsmittelqualität Salzsäure ist.

13. Verfahren nach Anspruch 1, wobei das Alkali von Nahrungsmittelqualität Natriumhydroxid oder Natriumbicarbonat ist.

14. Verfahren nach Anspruch 9, wobei das Alkali von Nahrungsmittelqualität Natriumhydroxid oder Natriumbicarbonat ist.

15. Proteinzusammensetzung mit reduzierten Niveaus von Calcium und Natrium, die durch das Verfahren nach Anspruch 1 erhalten wird.

## Revendications

1. Procédé de récupération, à partir de volaille désossée contenant graisse, os et protéine et des niveaux initiaux de calcium et de sodium, d'une composition protéique ayant des niveaux réduits de calcium et de sodium par rapport aux niveaux initiaux de calcium et de sodium, dans lequel la volaille désossée a 65 à 85 % en poids de viande maigre, le procédé comprenant les étapes de :
a) broyage de ladite volaille dans l'eau,
b) ajout d'un acide de qualité alimentaire à la volaille broyée pour atteindre un pH de 3,6 à 4,4 pour ainsi solubiliser ladite protéine, dans lequel le calcium reste insoluble,
c) après l'ajout de l'acide de qualité alimentaire à l'étape b), séparation de la graisse solide de la protéine solubilisée, dans lequel le calcium est séparé conjointement à la graisse solide de la protéine solubilisée,
d) ajout d'un alcalin de qualité alimentaire à la graisse pour neutraliser l'acide dans la graisse et à la protéine solubilisée pour neutraliser l'acide dans la protéine et pour précipiter la protéine, dans lequel le sodium reste soluble, et
e) récupération, dans le précipité, de la composition protéique ayant des niveaux réduits de calcium et de sodium comparé aux niveaux initiaux de calcium et de sodium, dans lequel la composition protéique a 14 % en poids ou plus de protéine et moins de 10 % en poids de graisse, dans lequel les moins de 10 % en poids de graisse sont stabilisés contre l'oxydation.

2. Procédé selon la revendication 1, dans lequel la composition protéique avec des niveaux réduits de calcium et de sodium a une couleur de 75 à 52 L*, de 25 à 15 a* et de 23 à 16b* .

3. Procédé selon la revendication 1, dans lequel ledit pH à l'étape b est de 3,6 à 3,8.

4. Procédé selon la revendication 1, dans lequel un acide de qualité alimentaire est ajouté à l'étape a.

5. Procédé selon la revendication 3, dans lequel un acide de qualité alimentaire est ajouté à l'étape a.

6. Procédé selon la revendication 1, dans lequel ledit acide de qualité alimentaire est l'acide chlorhydrique et/ou l'acide citrique.

7. Procédé selon la revendication 3, dans lequel ledit acide de qualité alimentaire est l'acide chlorhydrique et/ou l'acide citrique.

8. Procédé selon la revendication 4, dans lequel ledit acide de qualité alimentaire est l'acide chlorhydrique et/ou l'acide citrique.

9. Procédé selon la revendication 5, dans lequel ledit acide de qualité alimentaire est l'acide chlorhydrique et/ou l'acide citrique.

10. Procédé selon la revendication 1, dans lequel l'eau est éliminée de ladite protéine à l'étape c avant l'ajout dudit alcalin de qualité alimentaire.

11. Procédé selon la revendication 10, dans lequel un acide de qualité alimentaire est ajouté à l'étape a.

12. Procédé selon la revendication 10, dans lequel ledit acide de qualité alimentaire est l'acide chlorhydrique.

13. Procédé selon la revendication 1, dans lequel ledit alcalin de qualité alimentaire est l'hydroxyde de sodium ou le bicarbonate de sodium.

14. Procédé selon la revendication 9, dans lequel ledit alcalin de qualité alimentaire est l'hydroxyde de sodium ou le bicarbonate de sodium.

15. Composition protéique ayant des niveaux réduits de calcium et de sodium obtenue par le procédé selon la revendication 1.
